# EUROPEAN PATENT SPECIFICATION

(11) **EP 1 602 548 B1**
(45) Date of publication and mention of the grant of the patent: **20.08.2008**
(21) Application number: 05076169.1
(22) Date of filing: 18.05.2005
(51) Int. Cl.: B62B 13/16

(54) **Foldable sledge**
Faltbarer Schlitten
Luge pliable

(30) Priority: 02.06.2004 NL 1026305
(43) Date of publication of application: 07.12.2005
(73) Proprietor: Wintersport Leerdam B.V., 4143 HL Leerdam (NL)
(72) Inventor: Greco, Vincenzo Martinus Guiseppe, 5591 NZ Heeze (NL)
(74) Representative: Hylarides, Paul Jacques

(56) References cited:
- DE-C1- 19 724 494
- DE-U1- 8 516 572
- DE-U1- 8 517 785
- GB-A- 191 210 953

## Description

The present invention relates to a foldable sledge, comprising an elongate left-hand seat part, an elongate right-hand seat part, a left-hand slide element, a right-hand slide element, at least two left-hand carriers on which the left-hand seat part and the left-hand slide element are arranged, at least two right-hand carriers on which the right-hand seat part and the right-hand slide element are arranged, and first hinge means for hingedly mounting the left-hand carriers on the right-hand carriers.

Many types of sledge are known with which an object, such as a person or load, can be moved sliding over snow or ice using two parallel ribs. Such sledges normally take up quite a lot of space and are therefore unwieldy in use. In order to obviate this drawback, sledges have been developed which can be folded between a position of use, in which the sledge can be moved over snow or ice, and a stowing position in which the outer dimensions of the sledge are reduced such that the sledge is easier to transport and takes up less space when stowed away, for instance in the summer period. Sledges of this latter foldable type are particularly popular since sledges are often used only for a short time and must be stowed away again after use. The fact that the sledges are foldable not only makes transport thereof easier, for instance in the boot of a car, but also has the advantage that the sledge takes up little storage space. Foldable sledges are also easier to take along in a ski-lift, in which there is often lack of space and in which sometimes non-foldable sledges may not be transported. Finally, a foldable sledge is easier to pick up and carry while walking.

The German patent DE 197 24 494 C1 which discloses all the features of the preamble of claim 1 and represents the closest prior art to claim 16 describes a foldable sledge consisting of two scissor mechanisms on which a seat is arranged on one side and two slide ribs on the other. The known sledge can be described as stable and is constructed such that during use the scissor mechanisms are relieved of load to reduce damage thereto.

The known foldable sledge does however have a number of drawbacks. A first drawback is that the folding mechanism is rather susceptible to malfunction. Owing to the fact that two lots of seven rotation points are applied in the folding mechanism, wherein a failure of only one rotation point is already enough to make the sledge unusable, there is quite a large chance that with prolonged use the sledge will break down, or at least function less well. Certainly when great forces are exerted on the rotation points, folding in and out of the sledge will become increasingly difficult in the course of time.

A further drawback of the known foldable sledge is that production costs are relatively high due to the relatively large number of different components of the folding mechanism.

A further drawback is that the precision with which the different components of the sledge must be embodied is relatively great. The lengths of the different scissor mechanism components and the positions of the different rotation points must therefore be precisely adapted to each other in order to ensure that the sledge can be properly folded in and out. Particularly in the case of prolonged use, wherein components of the sledge have been worn or otherwise deformed through use, folding in and out of the sledge can be difficult.

It is an object of the present invention to provide an improved sledge in which the above stated drawbacks are obviated.

It is also an object of the present invention to provide a sledge which can be folded up and unfolded in very simple manner.

These objectives are achieved in a foldable sledge of the above stated type in which each carrier comprises:
- a seat carrier part coupled to the first hinge means,
- a slide element carrier part coupled to the seat carrier part using second hinge means,
- a support element which is attached to the seat carrier part on one side with third hinge means and is mounted slidably on the slide element carrier part on the other side, whereby the sledge can be folded between a position of use and a stowing position.

Because the relevant support elements are mounted slidably on the associated carrier part of the slide element, a sledge which can be quickly folded up and unfolded is provided in a simple construction with a relatively small number of parts. Furthermore, because the support element can be displaced relative to the associated carrier part, it is possible to fix the associated carrier part at more than one preset position. This means that the position of the associated carrier part and the slide element mounted thereon is adjustable without therein modifying the construction of the sledge.

According to a preferred embodiment, the slide element carrier part is herein provided with at least one slot and the support element is provided with at least one protrusion which is slidable in the slot. This construction is relatively simple and therefore relatively little susceptible to malfunction. In a further preferred embodiment, a support element is provided close to an outer end thereof with a protrusion on either side, and an associated slide element carrier part is provided with two inward extending flanges, wherein the sides of the flanges directed toward each other are each provided with an elongate slot in which the respective protrusions can be received. The support element is herein enclosed between the two flanges such that the protrusions always remain inside the slots provided in the flanges, which enhances the reliability and robustness of the carriers.

According to a further preferred embodiment, the sledge comprises a support element lock for locking the support element to the slide element carrier part in the position of use of the sledge. The support element lock preferably comprises:
- one or more openings arranged in the slide element carrier part;
- one or more displaceable pins arranged on the outer end of the support element, wherein in the position of use the pins are displaceable into the associated openings.

The support element is fixed relative to the slide element carrier part by arranging the pins in the openings, while when the pins are taken out of the openings the support element is slidable inside the slide element carrier part, whereby the sledge can be folded up. It is noted that the position of the slide elements in the position of use can be adjusted by a correct positioning of said openings. In specific embodiments, openings are for instance provided at a number of positions so that a user can choose from a number of preferred positions of the relevant slide element.

In a further preferred embodiment, a pin is coupled to a spring for the purpose of holding the pin under spring pressure in the associated opening. This means that when no external pressure is exerted on the pins by the user the pins will always remain in the opening, whereby the sledge remains fixed in its position of use. Only be overcoming the spring pressure when sliding the pins inward can the sledge be folded up, which prevents undesired folding-up of the sledge. When the above stated embodiment is applied in which the slide element carrier part is provided with two inward extending flanges, the support element is preferably with two pins provided on either side of the support element and under outward spring pressure. The user must press in both pins simultaneously and thus remove them from the openings before the support element can be displaced in the carrier in order to fold up the sledge. So as to further simplify pressing of the pins, notches having a shape and/or dimensions corresponding to those of fingers of a user are provided around the openings in the slide element carrier part.

According to a further preferred embodiment of the invention, the components of the four carriers have a substantially identical form. The seat carrier parts of the four different carriers are in other words the same, the support elements are the same and the slide element carrier parts are the same. This in fact means that all four carriers can be constructed from only three basic elements. This means that the total number of components required is very low and manufacturing costs can remain limited. In some embodiments the number of components is slightly higher than described above. If for instance a carrier locking mechanism is provided which is partially integrated with the carriers, it may be necessary to make a distinction between a left-hand seat carrier part and a right-hand seat carrier part. The total number of components required is in that case four.

In a further preferred embodiment of the invention, the carriers are manufactured from plastic, which results in weight-saving compared to the usual wooden components. In a particularly advantageous preferred embodiment, the carriers are manufactured in an injection-moulding process so that the different components can be produced serially and at relatively low cost.

In a further preferred embodiment, the first and third hinge means of a carrier are combined, thus resulting in a further simplification of the construction. This embodiment comprises only five rotation points per front and rear pair of carrier elements, i.e. three hinge elements and two slide-rotation points of the two support elements.

According to a further preferred embodiment, the sledge comprises a carrier lock for locking at least one of the left-hand carriers to at least one of the associated right-hand carriers in the position of use. In the locked situation this ensures that both seat parts are aligned relative to each other. In the above mentioned known foldable sledge a lock in the form of a spring-lock is provided on only one of the carriers. Inward movement of the carriers is greatly reduced by applying the sliding lock according to the present invention, which makes the sledge more stable and safer.

In preferred embodiments of the invention to be discussed below, the sledge is also provided with a front and rear carrier lock and with four individual support element locks. It will be apparent that it is possible to opt for a smaller number of locks, while a sufficient structural strength of the sledge is nevertheless maintained. Both carrier locks could thus be omitted when all the carriers are provided with a support element lock. The support element lock is after all sufficient per se to provide the sledge with a stable construction. With a view to safety however, it is also possible to opt to apply both a carrier lock and a support element lock.

In a further preferred embodiment, the seat carrier part and/or the slide element carrier part are constructed integrally in each case, which not only enhances the rigidity of the construction but also makes manufacture simpler and therein less costly.

In a preferred embodiment, both slide elements are likewise mounted hingedly on the respective seat parts using hinge means. This mounting serves to further increase the rigidity of the construction.

The invention also relates to a carrier as defined above which is evidently intended for the present sledge.

Further advantages, features and details of the present invention will be elucidated on the basis of the following description of a preferred embodiment thereof. Reference is made in the description to the figures, in which:
figure 1a is a side view in perspective of a preferred embodiment of the invention;
figure 1b is an exploded side view in perspective of figure 1a in the position of use;
figure 2 is a perspective bottom view of the preferred embodiment of figure 1b in the position of use;
figure 3 is a perspective bottom view from another angle of the preferred embodiment of figure 2;
figure 4 is a perspective bottom view of the embodiment in an intermediate position between the position of use and the storage position; and
figure 5 is a side view in perspective of the preferred embodiment in the storage position.

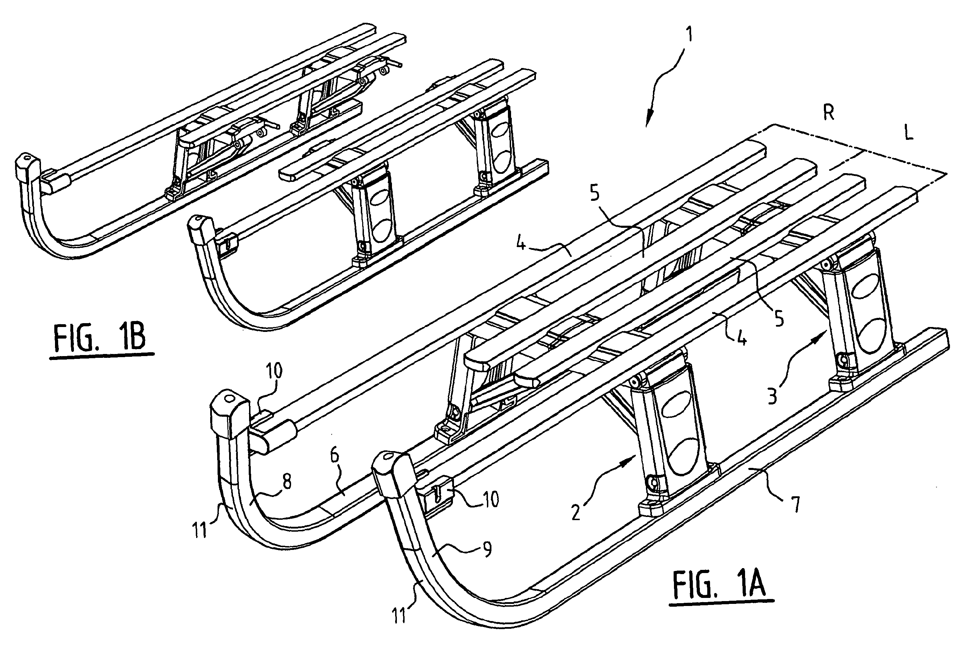

Figures 1a and 1b show a sledge 1 constructed from a right-hand part R and a left-hand part L. The sledge consists of a front carrier 2 and a rear carrier 3, wherein to both carriers there is attached a right-hand seat part consisting of a relatively long wooden slat 4 and a relatively short wooden slat 5, and a left-hand seat part corresponding thereto. The left-hand seat part is thus constructed from a long slat 4 and a relatively short slat 5. Slats 4,5 function as support for the person or load on the sledge. A slide rib 6 is arranged on the right on the underside of carriers 2,3 and a slide rib 7 on the left. Both slide ribs 6,7 are provided on their leading end with respective curved parts 8,9. Curved parts 8,9 here extend so far upward that the above mentioned relatively long slats are arranged on the respective curved parts 8,9 using hinges 10. On the underside the ribs 6,7 are provided with steel or plastic strips 11 for the purpose of improving the sliding properties over snow or ice.

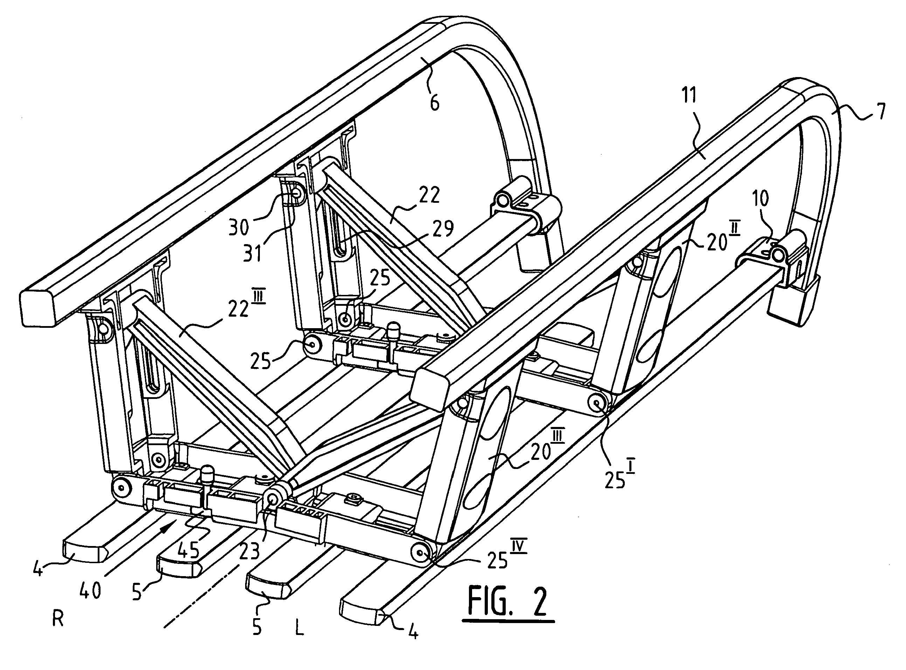

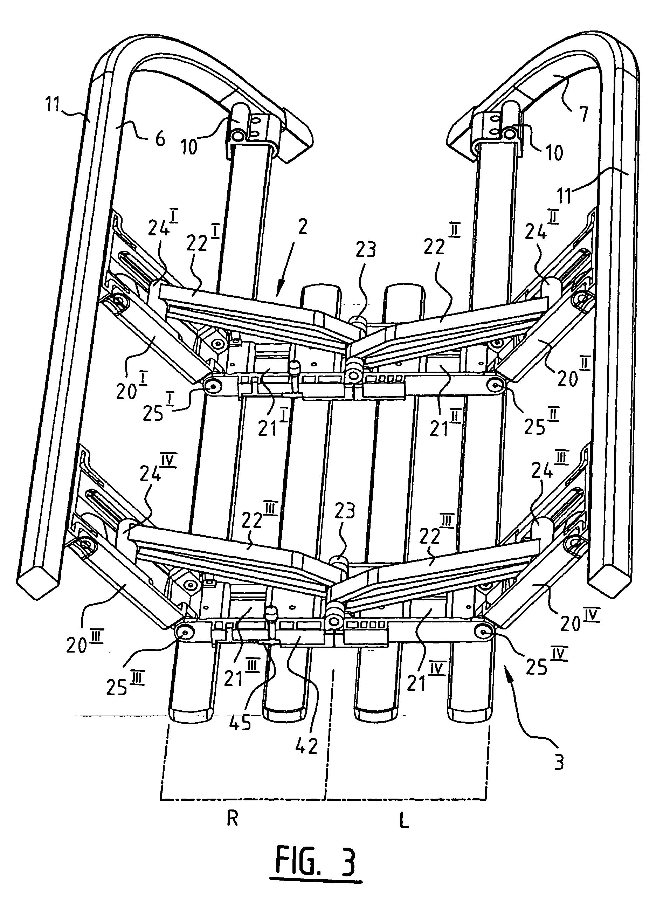

In figures 2 and 3 the construction of the sledge is shown from the underside. Shown clearly are the front carrier 2 and rear carrier 3 on which are arranged slats 4,5 and slide ribs 6,7. The front carrier 2 and rear carrier 3 are in turn each constructed from a left-hand part and a right-hand part. Carrier 2 comprises for instance a right-hand rib carrier part 20ⁱ, a left-hand rib carrier part 20ⁱⁱ, while rear carrier 3 comprises a right-hand rib carrier part 20ⁱⁱⁱ and a left-hand rib carrier part 20^{iv}. Likewise provided are seat carrier parts 21ⁱ-21^{iv}, which elements are arranged hingedly on rib carrier parts 20ⁱ, 20ⁱⁱ, 20ⁱⁱⁱ, 20^{iv} by means of respective hinges 25ⁱ, 25ⁱⁱ, 25ⁱⁱⁱ and 25^{iv}. Provided between seat carrier parts 21ⁱ-21^{iv} are respective support elements 22ⁱ-22^{iv}. In the shown embodiments the rib carrier parts 20ⁱ-20^{iv} are identical to each other. The seat carrier parts 21ⁱ-21^{iv} and support elements 22ⁱ-22^{iv} are likewise identical. Only the front carrier on the left-hand side will therefore be described below. A description of the other carrier parts can be omitted since the embodiment and the operation thereof can be inferred directly from the embodiment and operation of the left-hand front carrier which is discussed.

Figures 2 and 3 show clearly that the left and right-hand part of the sledge are pivotable relative to each other with a front and a rear hinge 23, which hinges are arranged between respective seat carrier parts 21. A lock 40 is provided per carrier 2,3 by ensuring that in the position of use the seat carrier parts 21ⁱ-21^{iv} are aligned relative to each other. Lock 40 is formed by housing 42 arranged on the relevant seat carrier part 21 and housing 43 arranged on the opposite seat carrier part 21. Pin 40 can be displaced in transverse direction (see double arrow) in housing 42, wherein housing 42 is provided with two recesses in which a control protrusion 44 is rotatable on pin 45. The pin is displaceable not only in housing 42 but also in housing 43, so that both carrier parts can be fixed relative to each other by displacing control part 44 in the direction of the opposite seat carrier part.

Hinges 23 with which seat carrier parts 21 are mutually coupled also serve as hinge for support elements 22ⁱ and 22ⁱⁱ in respect of the front carrier and support elements 22ⁱⁱⁱ and 22^{iv} in respect of the rear carrier. Support elements 22 are provided on their opposite end 24 with a component with which support element 22 can be displaced in slots 29 arranged on the inner side of rib carrier parts 20.

Components 24 are provided on the inner side with two pins 31 (pin-locks) which are pressed outward by springs (not shown) under spring pressure. The pins press against the inside of the respective slot 29 until they reach the respective recess 32 provided in the slot. Having arrived there, the pins are displaced outward, whereby the associated support element 22 is automatically locked relative to rib carrier part 20.

In order to bring about release, a user must press both pins inward again simultaneously so that component 24 is once again slidable in slot 29. In order to facilitate pressing inward and to avoid damage to the outer end of pins 30, shallow notches 31 are provided around openings 32. The shape of these notches roughly corresponds to that of the fingers of the user so that the user presses the pins inward at exactly the correct position with his fingers.

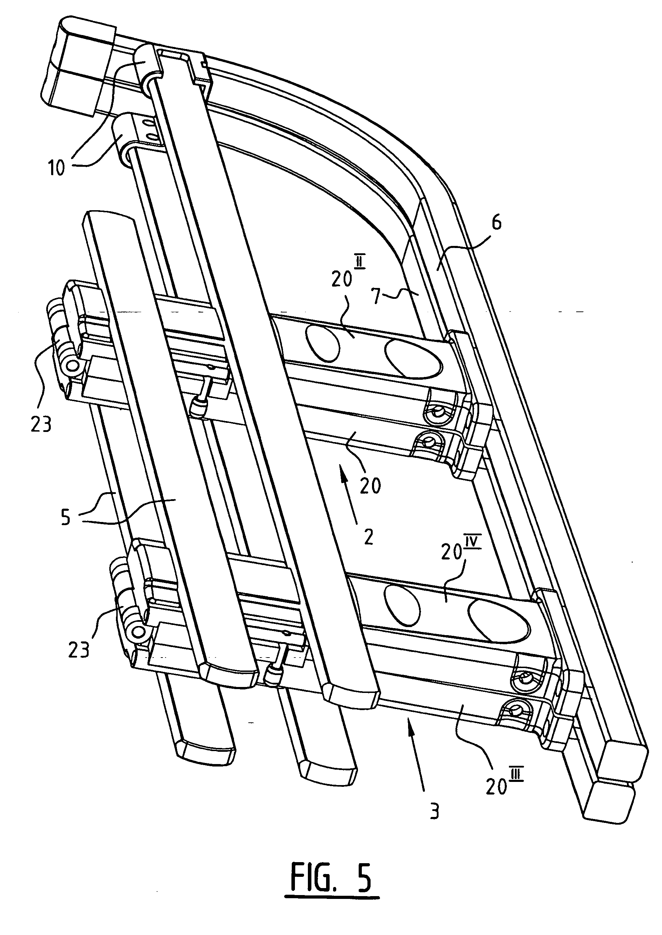

The sledge is shown in a position of use in figure 1b, while in figure 5 the stowing position is shown. In the stowing position the sledge is folded to minimal outer dimensions and can thereby be transported more readily and takes up less storage space.

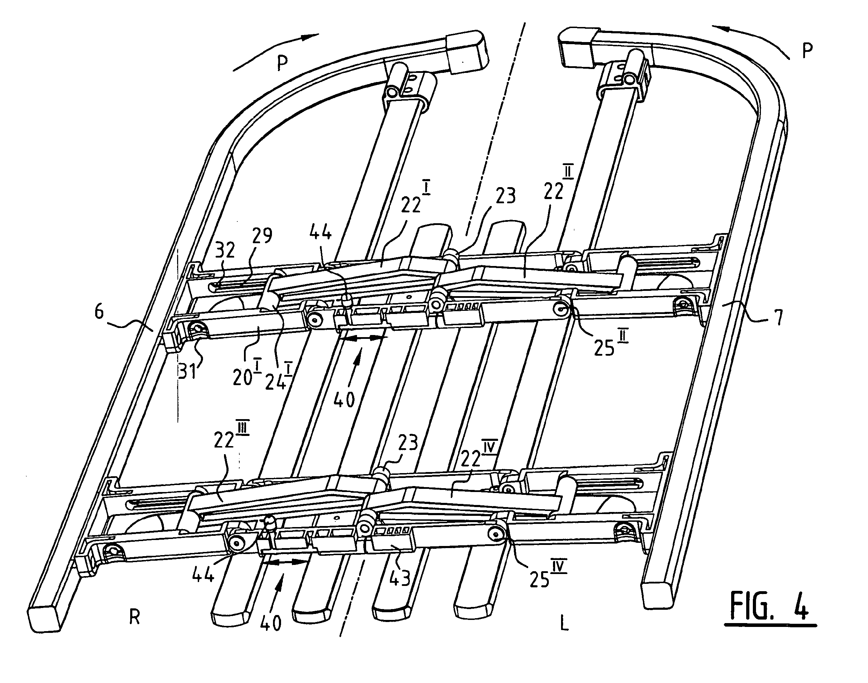

In figure 4 the sledge is shown in a position between the position of use and stowing position, wherein slide ribs 6,7 are displaced laterally after release of the slide support element locking, while the right and left-hand seat carrier parts 21 are still fixed relative to each other. After operation of the carrier lock 40, the left and right-hand parts can be folded respectively in the direction of arrow P into the end position (stowing position) shown in figure 5.

As discussed above, both pairs of spring-mounted pins must be pressed in simultaneously in the shown embodiment to allow unlocking on one side of the sledge. The sledge can only be folded up once the two sides of the sledge are unlocked and once the sliding locks have been displaced. Because of this mechanism it is for instance difficult for children to unlock the sledge. The danger of the sledge accidentally unlocking during play is therefore relatively small.

In a preferred embodiment the total length of the sledge is about 110 cm. The seat height, i.e. the height in the position of use, is about 23 cm, while the seat width in the position of use is about 30 cm. In stowing position the total height is about 34 cm.

The rights sought are not defined by the preferred embodiment of the invention described herein, but rather by the following claims, within the scope of which many modifications can be envisaged.

## Claims

1. Foldable sledge, comprising:
- an elongate left-hand seat part (L);
- an elongate right-hand seat part (R);
- a left-hand slide element (7);
- a right-hand slide element (6);
- at least two left-hand carriers on which the left-hand seat part and the left-hand slide element are arranged;
- at least two right-hand carriers on which the right-hand seat part and the right-hand slide element are arranged;
- first hinge means (23) for hingedly mounting the left-hand carriers on the right-hand carriers;
**characterized in that** each carrier comprises:
- a seat carrier part (21) coupled to the first hinge means,
- a slide element carrier part (20) coupled to the seat carrier part using second hinge means (25),
- a support element (22) which is attached to the seat carrier part on one side with third hinge means and is mounted slidably on the other side (24) on the slide element carrier part, whereby the sledge can be folded between a position of use and a stowing position.

2. Sledge as claimed in claim 1, wherein the slide element carrier part is provided with at least one slot and the support element is provided with at least one protrusion which is slidable in the slot.

3. Sledge as claimed in claim 2, wherein the support element is provided close to an outer end with a protrusion on either side, and wherein the slide element carrier part is provided with two inward extending flanges, wherein the sides of the flanges directed toward each other are each provided with an elongate slot in which the respective protrusions can be received.

4. Sledge as claimed in any of the foregoing claims, comprising a support element lock for locking the support element to the slide element carrier part in the position of use of the sledge.

5. Sledge as claimed in claim 4, wherein the support element lock comprises:
- one or more openings arranged in the slide element carrier part;
- one or more displaceable pins arranged on the outer end of the support element, wherein in the position of use the pins are displaceable into the associated openings.

6. Sledge as claimed in claim 5, wherein a pin is coupled to a spring for the purpose of holding the pin under spring pressure in the associated opening.

7. Sledge as claimed in any of the foregoing claims, wherein the components of the four carriers have a substantially identical form.

8. Sledge as claimed in any of the foregoing claims, wherein the carriers are manufactured from plastic.

9. Sledge as claimed in claim 7 or 8, wherein the carriers are manufactured substantially from injection-moulded components.

10. Sledge as claimed in any of the foregoing claims, wherein the seat parts and/or the slide elements are manufactured substantially from wood.

11. Sledge as claimed in any of the foregoing claims, wherein the first and third hinge means of a carrier are combined.

12. Sledge as claimed in any of the foregoing claims, comprising a carrier lock for locking at least one of the left-hand carriers to at least one of the associated right-hand carriers in the position of use.

13. Sledge as claimed in claim 12, wherein the carrier lock comprises a sliding lock.

14. Sledge as claimed in any of the foregoing claims, wherein the seat carrier part and/or the slide element carrier part are constructed integrally in each case.

15. Sledge as claimed in any of the foregoing claims, wherein the slide elements are provided with a steel or plastic strip to improve the sliding properties.

16. Carrier, evidently intended for a sledge as claimed in any of the foregoing claims.

## Patentansprüche

1. Klappbarer Schlitten, umfassend:
einen länglichen linken Sitzteil (L);
einen länglichen rechten Sitzteil (R);
ein linkes Gleitelement (7);
ein rechtes Gleitelement (6);
zumindest zwei linke Träger, an welchen der linke Sitzteil und das linke Gleitelement angeordnet sind;
zumindest zwei rechte Träger, an welchen der rechte Sitzteil und das rechte Gleitelement angeordnet sind;
ein erstes Scharniermittel (23) zum klappbaren Montieren der linken Träger an den rechten Trägern;
**dadurch gekennzeichnet, dass** jeder Träger umfasst:
einen Sitzträgerteil (21), der mit dem ersten Scharniermittel gekoppelt ist,
einen Gleitelement-Trägerteil (20), der mit dem Sitzträgerteil mithilfe eines zweiten Scharniermittels (25) gekoppelt ist,
ein Stützelement (22), das an einer Seite mit dritten Scharniermitteln an dem Sitzträgerteil angebracht ist und das an der anderen Seite (24) verschiebbar an dem Gleitelement-Trägerteil gelagert ist, wodurch der Schlitten zwischen einer Benutzungsstellung und einer Verstaustellung geklappt werden kann.

2. Schlitten nach Anspruch 1, wobei an dem Gleitelement-Trägerteil zumindest ein Schlitz vorhanden ist und an dem Stützelement zumindest ein Vorsprung vorhanden ist, der in dem Schlitz verschiebbar ist.

3. Schlitten nach Anspruch 2, wobei an dem Stützelement dicht an einem äußeren Ende an jeder Seite ein Vorsprung vorhanden ist und wobei der Gleitelement-Trägerteil zwei sich nach innen erstreckende Flansche aufweist, wobei in den Seiten der Flansche, die zueinander gerichtet sind, jeweils ein länglicher Schlitz vorhanden ist, in welchen die jeweiligen Vorsprünge aufgenommen werden können.

4. Schlitten nach einem der vorhergehenden Ansprüche, welcher eine Stützelementverriegelung zum Verriegeln des Stützelements an dem Gleitelement-Trägerteil in der Benutzungsstellung des Schlittens umfasst.

5. Schlitten nach Anspruch 4, wobei die Stützelementverriegelung umfasst:
ein oder mehrere Öffnungen, die in dem Gleitelement-Trägerteil angeordnet sind;
ein oder mehrere verschiebbare Bolzen, die an dem äußeren Ende des Stützelements angeordnet sind, wobei in der Benutzungsstellung die Bolzen in die zugehörigen Öffnungen geschoben werden können.

6. Schlitten nach Anspruch 5, wobei ein Bolzen mit einer Feder gekoppelt ist, zum Zwecke des Haltens des Bolzens unter dem Druck der Feder in der zugehörigen Öffnung.

7. Schlitten nach einem der vorhergehenden Ansprüche, wobei die Komponenten der vier Träger eine im Wesentlichen identische Form aufweisen.

8. Schlitten nach einem der vorhergehenden Ansprüche, wobei die Träger aus Kunststoff hergestellt sind.

9. Schlitten nach Anspruch 7 oder 8, wobei die Träger im Wesentlichen aus Spritzgusskomponenten hergestellt sind.

10. Schlitten nach einem der vorhergehenden Ansprüche, wobei die Sitzteile und/oder die Gleitelemente im Wesentlichen aus Holz hergestellt sind.

11. Schlitten nach einem der vorhergehenden Ansprüche, wobei das erste und das dritte Scharniermittel eines Trägers kombiniert sind.

12. Schlitten nach einem der vorhergehenden Ansprüche, welcher eine Trägerverriegelung zum Verriegeln zumindest eines der linken Träger an zumindest einem der zugehörigen rechten Träger in der Benutzungsstellung umfasst.

13. Schlitten nach Anspruch 12, wobei die Trägerverriegelung eine Schiebeverriegelung umfasst.

14. Schlitten nach einem der vorhergehenden Ansprüche, wobei der Sitzträgerteil und/oder der Gleitelement-Trägerteil in jedem Fall integral aufgebaut sind.

15. Schlitten nach einem der vorhergehenden Ansprüche, wobei die Gleitelemente mit einem Stahl- oder Kunststoffstreifen ausgerüstet sind, um die Gleiteigenschaften zu verbessern.

16. Träger, der offensichtlich für einen Schlitten gemäß einem der vorhergehenden Ansprüche gedacht ist.

## Revendications

1. Luge pliable, comprenant :
- une partie allongée formant la partie gauche du siège (L) ;
- une partie allongée formant la partie droite du siège (R) ;
- un élément de glisse situé à gauche (7) ;
- un élément de glisse situé à droite (6) ;
- au moins deux supports situés à gauche, sur lesquels sont disposés la partie formant la partie gauche du siège et l'élément de glisse situé à gauche ;
- au moins deux supports situés à droite, sur lesquels sont disposés la partie formant la partie droite du siège et l'élément de glisse situé à droite ;
- un premier dispositif à charnière (23) permettant de monter sur charnière les supports situés à gauche sur les supports situés à droite ;
**caractérisée en ce que** chaque support comprend :
- une partie formant support de siège (21) reliée au premier dispositif à charnière,
- une partie formant support d'élément de coulissement (20) reliée à la partie formant support de siège à l'aide d'un deuxième dispositif à charnière (25),
- un élément (22) de soutien qui est attaché à la partie formant support de siège sur un côté à l'aide d'un troisième dispositif à charnière, et qui est monté avec liberté de coulisser sur l'autre côté (24) sur la partie formant support d'élément de glisse, moyennant quoi la luge peut être pliée entre une position d'utilisation et une position pliée.

2. Luge selon la revendication 1, dans laquelle la partie formant support d'élément de glisse est dotée d'au moins une fente et où l'élément de soutien est doté d'au moins une protubérance qui peut glisser dans la fente.

3. Luge selon la revendication 2, dans laquelle l'élément de soutien est prévu à proximité d'une extrémité extérieure avec une protubérance de part et d'autre, et dans laquelle la partie formant support d'élément de glisse est dotée de deux brides à extension vers l'intérieur, les côtés des brides étant dirigés l'un vers l'autre et chacune étant dotée d'une fente allongée dans laquelle les protubérances respectives peuvent être reçues.

4. Luge selon l'une quelconque des revendications précédentes, comprenant un verrou d'élément de soutien permettant de verrouiller l'élément de soutien à la partie formant support d'élément de glisse dans la position d'utilisation de la luge.

5. Luge selon la revendication 4, dans laquelle le verrou d'élément de soutien comprend :
- au moins une ouverture disposée dans la partie formant support d'élément de glisse ;
- au moins une broche déplaçable, disposée sur l'extrémité extérieure de l'élément de soutien, les broches étant déplaçables dans les ouvertures associées dans la position d'utilisation des broches.

6. Luge selon la revendication 5, dans laquelle une broche est couplée à un ressort afin de maintenir la broche sous la pression d'un ressort dans l'ouverture associée.

7. Luge selon l'une quelconque des revendications précédentes, dans laquelle les composants des quatre supports ont une forme pratiquement identique.

8. Luge selon l'une quelconque des revendications précédentes, dans laquelle les supports sont en matière plastique.

9. Luge selon la revendication 7 ou 8, dans laquelle les supports sont produits pratiquement à partir de composants de moulage par injection.

10. Luge selon l'une quelconque des revendications précédentes, dans laquelle les parties formant le siège et/ou les éléments de glisse sont pratiquement en bois.

11. Luge selon l'une quelconque des revendications précédentes, dans laquelle les premier et troisième dispositifs à charnière d'un support sont associés.

12. Luge selon l'une quelconque des revendications précédentes, comprenant un verrou de support permettant de verrouiller au moins un des supports de gauche à au moins un des supports de droite associés dans la position d'utilisation.

13. Luge selon la revendication 12, dans laquelle l'élément de soutien comprend un verrou de glissement.

14. Luge selon l'une quelconque des revendications précédentes, dans laquelle la partie formant support d'élément de siège et/ou la partie formant support d'élément de glisse sont construites de manière intégrée dans chaque cas.

15. Luge selon l'une quelconque des revendications précédentes, dans laquelle les éléments de glisse sont dotés d'une bande en acier ou en matière plastique, afin d'améliorer les caractéristiques de glissement.

16. Support, clairement destiné à une luge conforme à l'une quelconque des revendications précédentes.
